# EUROPÄISCHE PATENTANMELDUNG

(11) **EP 2 520 812 A2**
(43) Veröffentlichungstag der Anmeldung: **07.11.2012**
(21) Anmeldenummer: 12163524.7
(22) Anmeldetag: 10.04.2012
(51) Int. Cl.: F16B 5/08

(54) **Befestigungselementestreifen**

(30) Priorität: 02.05.2011 DE 102011075085
(71) Anmelder: HILTI Aktiengesellschaft, 9494 Schaan (LI)
(72) Erfinder: Kieber, Markus, 9486 Schaanwald (LI); Malm, Elisabeth, 11361 Stockholm (SE)

(57) **Zusammenfassung**

Streifen (100) für Befestigungselemente mit jeweils einem Schaft und einem Kopf, umfassend eine Mehrzahl von miteinander verbundenen Halteabschnitten (110) zum vorübergehenden Halten jeweils eines Befestigungselements, wobei ein erster Halteabschnitt eine Aufnahme für einen Schaft eines Befestigungselements umfasst, wobei die Aufnahme eine Befestigungsrichtung (130) definiert, in der das Befestigungselement von einer Befestigungsvorrichtung aus der Aufnahme heraus in einen Untergrund eintreibbar ist, und wobei die Aufnahme eine kopfseitige Stirnöffnung (140) aufweist, welche die Aufnahme entgegen der Befestigungsrichtung abschliesst, wobei ein Rand der kopfseitigen Stirnöffnung um einen spitzen Winkel gegenüber der Befestigungsrichtung geneigt ist.

## Beschreibung

Die Erfindung betrifft einen Streifen für Befestigungselemente mit jeweils einem Schaft und einem Kopf.

Derartige Streifen umfassen üblicherweise eine Mehrzahl von miteinander verbundenen Halteabschnitten zum vorübergehenden Halten jeweils eines Befestigungselements. Ein solcher Halteabschnitt umfasst dabei eine Aufnahme für einen Schaft oder einen Kopf des jeweiligen Befestigungselements. Während des Eintreibens des Befestigungselements in einen Untergrund mit Hilfe einer Befestigungsvorrichtung wird das Befestigungselement aus der Aufnahme heraus oder durch die Aufnahme hindurch gedrückt, wofür eine gewisse Kraft aufzuwenden ist. Gegebenenfalls wird dabei die Aufnahme zerstört, wodurch unter Umständen Reste der Aufnahme an dem Befestigungselement haften bleiben.

Es ist eine Aufgabe der Erfindung, einen Streifen zur Verfügung zu stellen, bei dem die Befestigungselemente auf einfache Weise und insbesondere mit geringem Kraftaufwand vereinzelbar sind.

Die Aufgabe ist bei einem Streifen für Befestigungselemente mit jeweils einem Schaft und einem Kopf gelöst, der eine Mehrzahl von miteinander verbundenen Halteabschnitten zum vorübergehenden Halten jeweils eines Befestigungselements umfasst. Ein erster Halteabschnitt umfasst dabei eine Aufnahme für einen Schaft des Befestigungselements, wobei die Aufnahme eine Befestigungsrichtung definiert, in der das Befestigungselement von einer Befestigungsvorrichtung aus der Aufnahme heraus in einen Untergrund eintreibbar ist. Der Streifen weist einen durchgängigen Streifenkern auf, wobei die Aufnahme ausserhalb des Streifenkerns angeordnet ist. Bevorzugt berührt die Aufnahme den Streifenkern. Bei einer alternativen Ausführungsform ist die Aufnahme von dem Streifenkern beabstandet und insbesondere mit diesem über einen oder mehrere Stege verbunden.

Bei einer bevorzugten Ausführungsform weist die Aufnahme eine kopfseitige Stirnöffnung auf, welche die Aufnahme entgegen der Befestigungsrichtung abschliesst, wobei ein Rand der kopfseitigen Stirnöffnung um einen spitzen Winkel gegenüber der Befestigungsrichtung geneigt ist. Neigungswinkel ist kleiner als ein rechter Winkel, bevorzugt zwischen 20° und 85°, besonders bevorzugt zwischen 30° und 80°. Bei Bewegung des Befestigungselements in der Befestigungsrichtung wird die Aufnahme durch das Befestigungselement, bevorzugt durch den Kopf oder einen Aufweitabschnitt des Befestigungselements, allmählich aufgeweitet oder aufgebogen, so dass die Befestigungselemente auf einfache Weise vereinzelbar sind.

Eine bevorzugte Ausführungsform zeichnet sich dadurch aus, dass die Aufnahme einen Schlitz aufweist, welcher sich an die kopfseitige Stirnöffnung anschliesst. Ein erforderlicher Kraftaufwand für die Vereinzelung des Befestigungselements wird dadurch unter Umständen verringert. Bevorzugt erstreckt sich der Schlitz entlang der Befestigungsrichtung, besonders bevorzugt durchgängig über die gesamte Länge der Aufnahme.

Eine bevorzugte Ausführungsform zeichnet sich dadurch aus, dass sich der Rand der kopfseitigen Stirnöffnung von dem Schlitz aus entgegen der Befestigungsrichtung erstreckt. Dies bedeutet, dass der Schlitz unter Umständen an der kürzeren Seite der Aufnahme ausgebildet ist, wodurch ein Aufweiten oder Aufbiegen der Aufnahme durch das Befestigungselement erleichtert ist.

Eine bevorzugte Ausführungsform zeichnet sich dadurch aus, dass das Befestigungselement in die Aufnahme einschnappbar ist. Hiermit ist eine einfache Montage des Befestigungselements möglich. Bevorzugt wird das Befestigungselement durch den Schlitz hindurch in die Aufnahme eingeschnappt.

Eine bevorzugte Ausführungsform zeichnet sich dadurch aus, dass die Aufnahme im Wesentlichen zylindrisch ausgebildet ist. Bevorzugt ist d e Form der Aufnahme an den Schaft des Befestigungselements angepasst.

Eine bevorzugte Ausführungsform zeichnet sich dadurch aus, dass die Aufnahme auch eine spitzenseitige Stirnöffnung aufweist, welche die Aufnahme in der Befestigungsrichtung abschliesst. Hierdurch wird ein Austreten des Befestigungselements während eines Eintreibvorgangs erleichtert. Bevorzugt schliesst sich die spitzenseitige Stirnöffnung an den Schlitz an, so dass der Schlitz die beiden Stirnöffnungen miteinander verbindet.

Bevorzugt ist auch ein Rand der spitzenseitigen Stirnöffnung um einen spitzen Winkel gegenüber der Befestigungsrichtung geneigt, so dass der Streifen auch bei Umkehr der Befestigungsrichtung verwendbar ist. Fehlerhafte Montage wird dadurch unter Umständen vermieden.

Eine bevorzugte Ausführungsform zeichnet sich dadurch aus, dass ein Befestigungselement an dem Halteabschnitt gehalten ist. Bevorzugt weist das Befestigungselement einen Schaft, welcher in der Aufnahme aufgenommen ist, an dem Ende des Schaftes entgegen der Befestigungsrichtung einen Kopf sowie an dem Ende des Schaftes in der Befestigungsrichtung eine Spitze auf. Besonders bevorzugt weist das Befestigungselement zwischen dem Kopf und dem Schaft einen trichterförmigen, bevorzugt konischen Aufweitabschnitt auf, dessen Aussenabmessungen quer zur Befestigungsrichtung die Innenabmessungen der kopfseitigen Stirnöffnung übersteigen. Hierdurch wird ein allmähliches Aufweiten oder Aufbiegen der Aufnahme durch den Kopf ermöglicht.

Eine bevorzugte Ausführungsform zeichnet sich dadurch aus, dass der Schaft ein Gewinde aufweist. Bevorzugt ist das Gewinde geeignet, bei Drehung des Befestigungselements um die Befestigungsrichtung in die Aufnahme ein Gegengewinde zu schneiden. Hierdurch wird unter Umständen eine Führung des Befestigungselements in der Aufnahme verbessert.

Eine bevorzugte Ausführungsform zeichnet sich dadurch aus, dass die Aufnahme von dem Streifen quer zur Befestigungsrichtung und quer zur Längsrichtung des Streifens abragt.

Eine bevorzugte Ausführungsform zeichnet sich dadurch aus, dass jeweils zwei zueinander nächst benachbarte Aufnahmen in der Befestigungsrichtung zueinander versetzt angeordnet sind. Durch eine versetzte Anordnung der Befestigungselemente ist eine teilweise Überlappung der Köpfe der Befestigungselemente und somit eine dichtere Packung der Befestigungselemente entlang einer Längsrichtung des Streifens möglich.

Eine bevorzugte Ausführungsform zeichnet sich dadurch aus, dass jeweils zwischen zwei Halteabschnitten ein Verbindungsabschnitt angeordnet ist, um die Halteabschnitte miteinander zu verbinden. Bevorzugt weisen die Verbindungsabschnitte einen oder zwei Verbindungsstege auf.

Eine bevorzugte Ausführungsform zeichnet sich dadurch aus, dass eine Mehrzahl von Ausnehmungen in dem Streifen vorgesehen ist, welche für einen Vorschub des Streifens mit einem Transportelement in Eingriff bringbar sind. Zu diesem Zweck sind die Ausnehmungen bevorzugt gleichmässig voneinander beabstandet. Bevorzugt sind die Ausnehmungen in Längsrichtung des Streifens jeweils zwischen zwei Aufnahmen angeordnet. Besonders bevorzugt weisen die Verbindungsabschnitte jeweils eine Ausnehmung auf, bevorzugt zwischen zwei Verbindungsstegen. Bevorzugt sind die Ausnehmungen als Durchbrüche oder Vertiefungen ausgebildet.

Eine bevorzugte Ausführungsform zeichnet sich dadurch aus, dass der Streifen eine oder mehrere Sollbruchstellen aufweist. Bevorzugt weist ein Verbindungsabschnitt eine Sollbruchstelle auf. Besonders bevorzugt weist jeder Verbindungsabschnitt eine Sollbruchstelle auf. Die Sollbruchstellen dienen einem vereinfachten Ablängen des Streifens vor der Verwendung, also mit Befestigungselementen bestückt, oder nach der Verwendung, also ohne Befestigungselemente. Bevorzugt sind die Sollbruchstellen als Kerben in dem Streifen ausbildet.

Eine bevorzugte Ausführungsform zeichnet sich dadurch aus, dass der Streifen einen Hartkunststoff umfasst. Bevorzugt weist der Streifen eine ausreichende Steifheit aus, um einfach transportiert zu werden.

Eine bevorzugte Ausführungsform zeichnet sich dadurch aus, dass jeder Halteabschnitt eine Aufnahme mit einem oder mehreren der genannten vorteilhaften Merkmale umfasst.

Nachfolgend werden bevorzugte Ausführungsbeispiele unter Bezugnahme auf die Zeichnungen näher erläutert. Es zeigen:
- Fig. 1: einen St eifen für Befestigungselemente,
- Fig. 2: einen Halteabschnitt,
- Fig. 3: einen Streifen für Befestigungselemente, und
- Fig. 4: einen Streifen für Befestigungselemente.

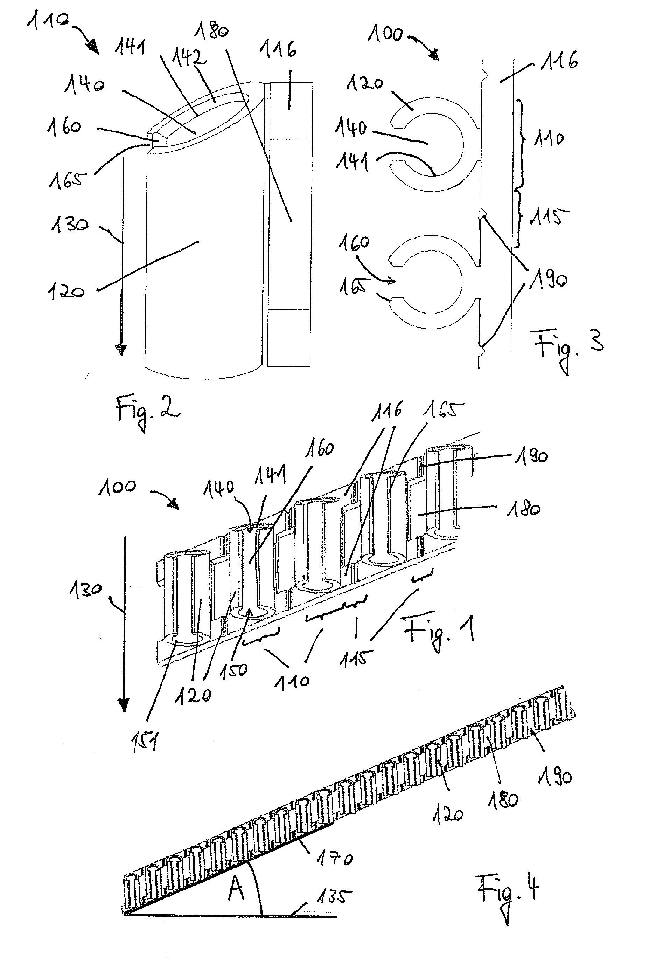

Fig. 1 zeigt eine Schrägansicht eines Streifens 100 für nicht dargestellte Befestigungselemente mit jeweils einem Schaft und einem Kopf. Der Streifen 100 ist aus Hartkunststoff gefertigt und umfasst eine Vielzahl von miteinander verbundenen Halteabschnitten 110 zum vorübergehenden Halten jeweils eines Befestigungselements sowie jeweils zwischen zwei Halteabschnitten angeordneten Verbindungsabschnitten 115, von denen jeder zwei Verbindungsstege 116 zur Verbindung zweier zueinander benachbarter Halteabschnitte 116 aufweist. Die Befestigungselemente sind dabei bevorzugt mittig gehalten, also jeweils mit ihrem Schwerpunkt innerhalb einer Aufnahme 120.

Jeder Halteabschnitt 110 umfasst dabei eine Aufnahme 120 für einen Schaft des Befestigungselements, das in einer Befestigungsrichtung 130 aus der Aufnahme 120 heraus in einen nicht dargestellten Untergrund eintreibbar ist. Die Aufnahme 120 weist eine kopfseitige Stirnöffnung 140 sowie eine spitzenseitige Stirnöffnung 150 auf, welche die Aufnahme entgegen beziehungsweise in der Befestigungsrichtung abschliessen, wobei ein Rand 141 der kopfseitigen Stirnöffnung 140 um einen spitzen Winkel von 60° gegenüber der Befestigungsrichtung 130 geneigt ist. An dem Rand 141 ist eine bevorzugt trichterförmige, besonders bevorzugt konische Fase 142 vorgesehen, wodurch die Vereinzelung der Befestigungselemente unter Umständen erleichtert wird. Das Befestigungselement biegt dann aufgrund seiner Bewegung in der Befestigungsrichtung 130 die Aufnahme 120 auf und schnappt mit relativ geringem Kraftaufwand aus der Aufnahme 120 aus.

Die Aufnahme 120 weist einen Schlitz 160 auf, welcher sich durchgängig über die gesamte Länge der Aufnahme 120 entlang der Befestigungsrichtung 130 erstreckt und die kopfseitige Stirnöffnung 140 und die spitzenseitige Stirnöffnung 150 miteinander verbindet. Der Rand 141 der kopfseitigen Stirnöffnung 140 erstreckt sich von dem Schlitz 160 aus gleichzeitig in die Zeichenebene hinein und entgegen der Befestigungsrichtung 130. Somit ist der Schlitz 160 an der kürzeren Seite der Aufnahme 120 ausgebildet, da der Rand 151 der spitzenseitigen Stirnöffnung 150 mit der Befestigungsrichtung 130 einen rechten Winkel einschliesst. Die Breite des Schlitzes 160 ist kleiner als der Innendurchmesser der zylindrischen Aufnahme 120, so dass das nicht gezeigte Befestigungselement durch den Schlitz 160 in die Aufnahme 120 einschnappbar und sicher in der Aufnahme 120 gehalten ist. Das Einschnappen wird dabei durch Fasen 165 an den Rändern des Schlitzes 160 erleichtert.

Der Streifen 100 weist einen durchgängigen Streifenkern auf, welcher durch die Verbindungsabschnitte 115 und die zwischen den Verbindungsabschnitten angeordneten Bereiche der Halteabschnitte 110 gebildet ist. Die Aufnahme 120 ist ausserhalb des Streifenkerns angeordnet. Insbesondere ragt die Aufnahme 120 senkrecht zu einer von der Befestigungsrichtung 130 und einer Längsrichtung 170 des Streifens 100 aufgespannten Streifenebene von dem Streifenkern ab. Dadurch ist es einfach möglich, den Streifen 100 durch geeignete Materialwahl sowie Materialstärke ausreichend steif zu gestalten, um ein einfaches Zuführen des Streifens 100 in eine Befestigungsvorrichtung zu gewährleisten, ohne dabei auf eine für das Vereinzeln der Befestigungselemente erforderliche Flexibilität der Aufnahmen 120 zu verzichten, welche eine geringere Materialstärke aufweisen als der Kern des Streifens 100. Wie in Fig. 2 und 3 zu sehen ist, ist die Aufnahme 120 über einen kurzen Steg mit dem Streifenkern verbunden. Bei nicht gezeigten Ausführungsbeispielen ist die Aufnahme unmittelbar mit dem Streifenkern verbunden.

Weiterhin sind die Aufnahmen 120 von Halteabschnitt 110 zu Halteabschnitt 110 in der Befestigungsrichtung 130 zueinander versetzt angeordnet, so dass der Streifen 100 gegenüber einer senkrecht zur Befestigungsrichtung 130 ausgerichteten Befestigungsebene 135 geneigt ist. Der Neigungswinkel A zwischen der Längsrichtung 170 des Streifens 100 und der Befestigungsebene 135 beträgt bevorzugt zwischen 10° und 45°, besonders bevorzugt 25°. Durch die damit verbundene versetzte Anordnung der Befestigungselemente überlappen sich deren Köpfe teilweise, so dass bei gleicher Länge des Streifens 100 mehr Befestigungselemente an dem Streifen gehalten werden.

Jeder Verbindungsabschnitt 115 weist zwischen den jeweiligen Verbindungsstegen 116 eine als Durchbruch ausgebildete Ausnehmung 180 auf, welche einem Vorschub des Streifens 100 dient, indem ein nicht dargestelltes Transportelement, beispielsweise ein Zahnrad, in die Ausnehmungen 180 eingreift. Zu diesem Zweck sind die Ausnehmungen 180 gleichmässig voneinander beabstandet. Unter Umständen ist somit eine Positionierung der Befestigungselemente in einer Befestigungsvorrichtung möglich, ohne dass dabei eine Kraft auf das jeweilige Befestigungselement wirkt. Eine solche kraftfreie Positionierung des Befestigungselements ist vorteilhaft für den Eintreibvorgang. Weiterhin weisen die Verbindungsstege 116 in ihrer jeweiligen Mitte eine als Kerbe 190 ausgebildete Sollbruchstelle auf, so dass der Streifen 100 einfach abgelängt werden kann. Unter Umständen geschieht das Ablängen automatisch durch eine Befestigungsvorrichtung nach jedem Eintreibvorgang, so dass kein leerer Streifen aus der Vorrichtung hervorsteht, was die Arbeit mit einer solchen Vorrichtung behindern könnte.

Die vorliegende Erfindung wurde am Beispiel eines Streifens für Befestigungselemente mit einem Schaft und einem Kopf, insbesondere für eine Befestigungsvorrichtung, dargestellt. Es wird jedoch darauf hingewiesen, dass der erfindungsgemässe Streifen auch für andere Anwendungszwecke geeignet ist.

## Patentansprüche

1. Streifen für Befestigungselemente mit jeweils einem Schaft und einem Kopf, umfassend eine Mehrzahl von miteinander verbundenen Halteabschnitten zum vorübergehenden Halten jeweils eines Befestigungselements, wobei ein erster Halteabschnitt eine Aufnahme für einen Schaft eines Befestigungselements umfasst, wobei die Aufnahme eine Befestigungsrichtung definiert, in der das Befestigungselement von einer Befestigungsvorrichtung aus der Aufnahme heraus in einen Untergrund eintreibbar ist, wobei der Streifen einen durchgängigen Streifenkern aufweist, und wobei die Aufnahme ausserhalb des Streifenkerns angeordnet ist.

2. Streifen nach Anspruch 1, wobei die Aufnahme eine kopfseitige Stirnöffnung aufweist, welche die Aufnahme entgegen der Befestigungsrichtung abschliesst, und wobei ein Rand der kopfseitigen Stirnöffnung um einen spitzen Winkel gegenüber der Befestigungsrichtung geneigt ist, insbesondere vom Streifen weg geneigt ist.

3. Streifen nach einem der vorhergehenden Ansprüche, wobei die Aufnahme einen Schlitz aufweist, welcher sich an die kopfseitige Stirnöffnung anschliesst und insbesondere entlang der Befestigungsrichtung erstreckt.

4. Streifen nach einem der vorhergehenden Ansprüche, wobei der Schlitz in der Befestigungsrichtung durchgängig an der Aufnahme ausgebildet ist.

5. Streifen nach einem der vorhergehenden Ansprüche, wobei sich der Rand der kopfseitigen Stirnöffnung von dem Schlitz aus entgegen der Befestigungsrichtung erstreckt.

6. Streifen nach einem der vorhergehenden Ansprüche, wobei das Befestigungselement in die Aufnahme einschnappbar ist, insbesondere durch den Schlitz hindurch.

7. Streifen nach einem der vorhergehenden Ansprüche, wobei die Aufnahme im Wesentlichen zylindrisch ausgebildet ist.

8. Streifen nach einem der vorhergehenden Ansprüche, wobei die Aufnahme eine spitzenseitige Stirnöffnung aufweist, welche die Aufnahme in der Befestigungsrichtung abschliesst und sich insbesondere an den Schlitz anschliesst.

9. Streifen nach einem der vorhergehenden Ansprüche, wobei ein Rand der spitzenseitigen Stirnöffnung um einen spitzen Winkel gegenüber der Befestigungsrichtung geneigt ist, insbesondere vom Streifen weg geneigt ist.

10. Streifen nach einem der vorhergehenden Ansprüche, weiterhin umfassend ein Befestigungselement mit einem Schaft, welcher in der Aufnahme aufgenommen ist.

11. Streifen nach einem der vorhergehenden Ansprüche, wobei das Befestigungselement an dem Ende des Schaftes entgegen der Befestigungsrichtung einen Kopf und zwischen dem Kopf und dem Schaft einen trichterförmigen, insbesondere konischen Aufweitabschnitt aufweist, dessen Aussenabmessungen quer zur Befestigungsrichtung die Innenabmessungen der kopfseitigen Stirnöffnung übersteigen.

12. Streifen nach einem der vorhergehenden Ansprüche, wobei die Aufnahme bei Bewegung des Befestigungselements in der Befestigungsrichtung durch den Kopf oder den Aufweitabschnitt aufweitbar, insbesondere aufbiegbar ist.

13. Streifen nach einem der vorhergehenden Ansprüche, wobei der Schaft ein Gewinde aufweist.

14. Streifen nach einem der vorhergehenden Ansprüche, wobei das Gewinde geeignet ist, bei Drehung des Befestigungselements um die Befestigungsrichtung in die Aufnahme ein Gegengewinde zu schneiden.

15. Streifen nach einem der vorhergehenden Ansprüche, wobei die Aufnahme von dem Streifen quer zur Befestigungsrichtung und quer zur Längsrichtung des Streifens, insbesondere nur auf einer Seite abragt.
